## Europäisches Patentamt

## European Patent Office

## Office européen des brevets

(19)

(11) Veröffentlichungsnummer: **0 213 264**
**B1**

(12) # EUROPÄISCHE PATENTSCHRIFT

(45) Veröffentlichungstag der Patentschrift:
16.05.90

(21) Anmeldenummer: 86102713.4

(22) Anmeldetag: 01.03.86

(51) Int. Cl.⁵: **B29C 47/92, B29C 47/10,**
**B29C 47/58**

(54) **Mess- und Regeleinrichtung zum Verarbeiten thermoplastischer Massen und Schneckenextruder für die Anwendung einer derartigen Mess- und Regeleinrichtung.**

(30) Priorität: 17.08.85 DE 3529523

(43) Veröffentlichungstag der Anmeldung:
11.03.87 Patentblatt 87/11

(45) Bekanntmachung des Hinweises auf die Patenterteilung:
16.05.90 Patentblatt 90/20

(84) Benannte Vertragsstaaten:
AT BE CH FR GB IT LI LU NL SE

(73) Patentinhaber: Schleberger, Albert, Am Dausenbusch 2,
D-5600 Wuppertal(DE)

(72) Erfinder: Schleberger, Albert, Am Dausenbusch 2,
D-5600 Wuppertal(DE)

(74) Vertreter: Beyer, Rudi, Patentanwalt Dipl.-Ing. Rudi
Beyer Am Dickelsbach 8, D-4030 Ratingen 6 (Hösel)(DE)

(56) Entgegenhaltungen:
EP-A- 0 006 489
DE-A- 2 351 328
DE-A- 2 910 041
DE-A- 3 037 441
DE-A- 3 233 841
DE-A- 3 310 484
FR-A- 2 148 486
FR-A- 2 547 531
US-A- 4 110 844

MODERN PLASTICS INTERNATIONAL, Band 14, Nr. 8,
August 1984, Seite 16, Lausanne, CH; "Gravimetric
metering improves extrudate uniformity, cuts costs"

## Beschreibung

### Oberbegriff

Die Erfindung betrifft eine Meß- und Regeleinrichtung zum Verarbeiten thermoplastischer Massen mit einem Materialtrichter und einem Einzugsteil, das über seinen Umfang mit mehreren sich in Förderrichtung konisch verjüngenden Längsnuten versehen ist, deren Volumina veränderbar ist.

Des weiteren betrifft die Erfindung einen Schneckenextruder zur Anwendung erfindungsgemäßer Meß- bzw. Regeleinrichtung.

Eine Meß- und Regeleinrichtung bzw. ein Schneckenextruder der oben bezeichneten Art sind aus der DE-A-3 233 841 bekannt.

### Stand der Technik

Mit den zum Stande der Technik zählenden Bauarten kann der sogenannte "Förderwirkungsgrad" nicht konstant gehalten werden, da er unter anderem beeinflußt wird von
- Schüttgewicht des Rohstoffes
- Temperatur des Rohstoffes
- Fließverhalten des Rohstoffes
- Korngröße, Kornform
- Schneckenkonstruktion und -größe
- Fließverhalten in der Schnecke und anschließend in dem Werkzeug
- Reibungskräfte im Zylinder
- Verschleißgrad von Schnecke und/oder Zylinder.

Der "Förderwirkungsgrad" ist definiert als spezifische Durchsatzmenge (kg/h). Das Produkt aus Schneckendrehzahl (U/min) und Förderwirkungsgrad (kg/h) ist demgemäß bei dem zum Stande der Technik zählenden Bauarten nicht konstant zu halten.

Zwar hat man schon zur Beeinflussung der Reibungskräfte im Einzugsbereich des Zylinders eines Schneckenextruders vorgeschlagen, die Zylinderinnenwand mit - verschieden geformten - Nuten zu versehen, wodurch der Förderwirkungsgrad in der Regel deutlich gesteigert und ein stabileres Förderverhalten gegenüber konventionellen Schneckenextrudern mit glatter - ungenuteter - Einzugszone erzielt wird, jedoch bringt diese deutliche Steigerung des Förderwirkungsgrades in der Praxis auch Nachteile mit sich, da gleichzeitig einige andere Parameter verändert werden, wie z.B.
- Verweilzeit des Kunststoffes im Extruder
- Homogenisierungsgrad des Kunststoffes
- Massetemperatur
- Druck im Extruder
- Erforderliches Drehmoment
- und andere mehr.

Eine dieser zum Stand der Technik zählenden Bauarten ist in der o.g. DE-A-3 233 841 beschrieben, die sich bisher in der Praxis aus den geschilderten Gründen nicht hat einführen können. Im übrigen ist die vorgeschlagene Konstruktion aufwendig und demgemäß kompliziert.

### Aufgabe

Der Erfindung liegt die Aufgabe zugrunde, den Förderwirkungsgrad und damit das Einzugsverhalten in Grenzen beeinflußbar und über eine geeignete Meß- und Regeleinrichtung der im Gattungsbegriff bezeichnete Art zu definieren und konstant zu halten, und zwar auch bei Verwendung verschiedenartiger Roh- und Zuschlagstoffe.

Des weiteren liegt der Erfindung die Aufgabe zugrunde, einen vorteilhaften, Schneckenextruder zur Anwendung dieser Regel- und Steuereinrichtung zu schaffen.

### Lösung betreffend die Regel- und Steuereinrichtung

Diese Aufgabe wird durch die in **Patentanspruch 1** wiedergegebenen Merkmale gelöst.

### Einige Vorteile

Bei Anwendung der erfindungsgemäßen Regel- und Steuerungseinrichtung ist es erstmalig möglich, bezogen auf eine frei wählbare Schneckendrehzahl innerhalb des oberen und unteren Förderwirkungsgrades eine mengenmäßig erfaßbare und regelbare Einstellung für den materialmäßigen optimalen Arbeitspunkt zu finden, konstant zu halten und zu reproduzieren, und zwar unter Berücksichtigung der oben genannten Einflußgrößen. Auf diese Weise wird es möglich, jeweils den optimalen Arbeitspunkt den Bedürfnissen anzupassen.

Für die gravimetrische Messung können z.B. geeignete Waagen, beispielsweise Bandwaagen, Differentialwaagen (loss in weight) o. dgl., zum Einsatz kommen wie sie im Handel erhältlich sind.

### Lösung betreffend den Schneckenextruder

Diese Aufgabe wird durch die in **Patentanspruch 2** wiedergegebenen Merkmale gelöst.

Mit dieser Einrichtung wird der angestrebte Zweck mit einem Schneckenextruder erreicht, der konstruktiv relativ einfach aufgebaut ist.

Je nach Anwendungsbereich werden verschiedene Formen und wirksame Nutlängen eingesetzt.

Durch die Anwendung der erfindungsgemäßen Einrichtung kann der jeweils optimale Arbeitspunkt den Bedürfnissen angepaßt werden.

Die Abdichtung der Nuten vor und hinter dem Einfülltrichter kann durch Lamellen, Schuppenbänder o. dgl. erzielt werden.

Die Verstellung ist feinfühlig durch eine abwechselnd beidseitig mit Druckmitteldruck, insbesondere durch Hydrauliköl beaufschlagte Kolben-Zylinder-Einheit (Schubkolbengetriebe) oder andere Linearantriebe, z.B. einem Spindelantrieb, möglich.

### Lösung betreffend den Schneckenextruder

In **Patentanspruch 3** ist eine vorteilhafte Variante nach der Erfindung beschrieben.

In der Zeichnung ist die Erfindung - teils schematisch -an einem Ausführungsbeispiel - teils im Schnitt - veranschaulicht.

Diese Zeichnung zeigt nur die wichtigsten Teile, die für das Verständnis der Erfindung notwendig sind.

Mit dem Bezugzeichen 1 ist eine Wägezelle bezeichnet, die über einem Materialtrichter 2 angeordnet ist, der einen Maschinentrichter 3 des Schneckenextruders beschickt. Durch die Wägezelle 1 wird gravimetrisch die jeweils vom Extruder verbrauchte Menge thermoplastischer Massen, insbesondere Pulver, Gries, Granulat oder Mischungen daraus, erfaßt.

Der Maschinentrichter 3 des Schneckenextruders bildet Bestandteil der Durchsatzmeßvorrichtung.

In der Zeichnung ist der Maschinentrichter 3 mit durchgezogenen und in gestrichelten Linien dargestellt worden. Hierdurch sollen die beiden extremen Stellungen dieses Maschinentrichters 3 veranschaulicht werden, der in Richtung X bzw. Y auf einer Linie, die parallel zur Längsachse des Schneckenextruders verläuft, durch eine abwechselnd beidseitig durch Druckmitteldruck, insbesondere Hydrauliköl beaufschlagte Kolben-Zylinder-Einheit stufenlos verstellbar ist. Der in der Zeichnungsebene gesehen maximal mögliche Verstellweg in die gestrichelt dargestellte Position ist mit L bezeichnet, wobei L gleichzeitig den Abstand des Maschinentrichters 3 von dem dem Schneckenextruder zugekehrten Flansch bezeichnet. Dieses Maß L beträgt in der Regel 4D, wobei D der Durchmesser des Schneckenextruders ist (vgl. Zeichnung).

Demgegenüber bezeichnet das Maß $L_1$ den minimalen Abstand von dem Flansch des Schneckenextruders, das in der Regel 1D entspricht. Zwischen diesen beiden Extremstellungen L bzw. $L_1$ des Maschinentrichters 3 ist jede beliebige Zwischenstellung möglich.

Das Bezugzeichen 5 bezeichnet den Extruderzylinder, in dem sich die motorisch angetriebene Extruderschnecke 6 dreht.

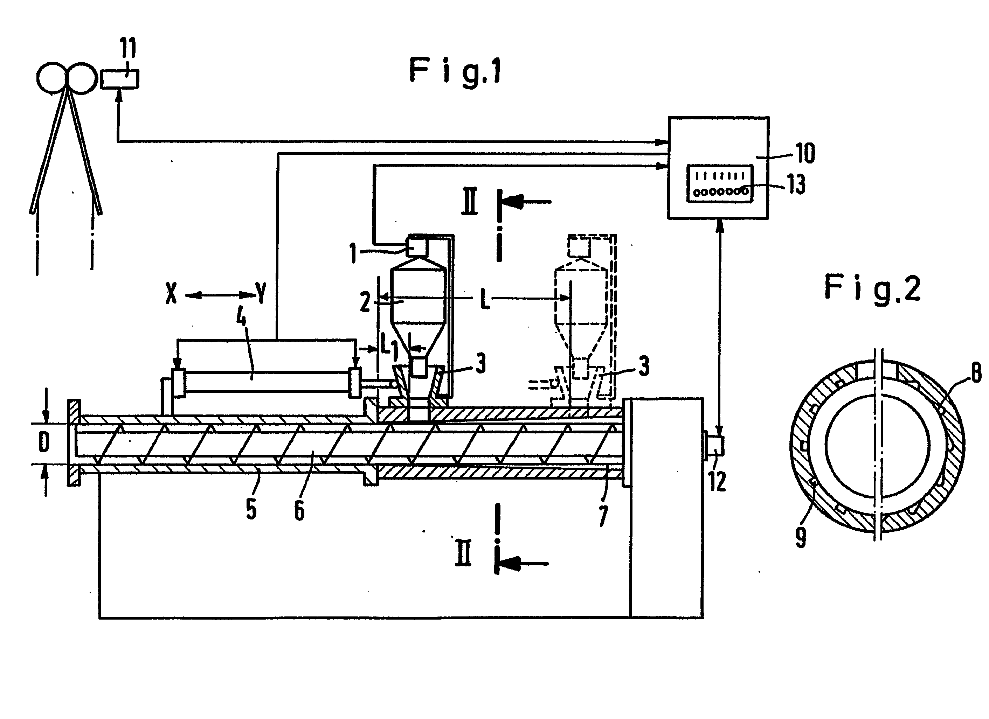

Mit 7 ist eine Nutbüchse mit in Richtung X sich konisch verjüngenden Nuten bezeichnet. Über den Umfang der Nutbüchse 7 sind mehrere solcher Nuten mit Abstand sowie parallel zueinender verlaufend angeordnet. In der Zeichnung sind in Fig. 2 verschiedene Nutformen 8,9 beispielsweise dargestellt.

Die Anordnung ist so getroffen, daß mittels der gravimetrischen Durchsatzmessung der aktuelle Förderwirkungsgrad erfaßt und durch axiale Verschiebung in Richtung X bzw. Y des Maschinentrichters 3 der wirksame Einlaufpunkt, bezogen auf die wirksame Länge der Nuten 8,9 der Nutbüchse 7 so lange verändert (geregelt) wird, bis der vorbestimmte Förderwirkungsgrad, der für den jeweiligen Anwendungsfall eingestellt wird, konstant zu halten ist, was auch bei Verwendung verschiedenartiger Roh- und/oder Zuschlagstoffe problemlos geschehen kann.

Die jeweils erfaßten Daten können einem Rechner 10 zugeführt werden, der den Maschinentrichter 3 durch Druckmittelbeaufschlagung der Kolben-Zylinder-Einheit 4 auf der einen oder anderen Seite so lange verstellt, bis der jeweils gewünschte Förderwirkungsgrad erreicht ist und dann durch die Steuer= bzw. Regeleinrichtung konstant gehalten wird.

Bei der aus der Zeichnung ersichtlichen Ausführungsform gibt die Wäge- bzw. Meßzelle 1 den Wert für das erfaßte Gewicht an den Rechner 10, der den Materialverbrauch Gewicht/Zeiteinheit ermittelt. Ein Drehimpulsgeber 12 gibt die jeweils aktuelle Schneckendrehzahl in den Rechner 10. Der Rechner 10 ermittelt den Förderwirkungsgrad. Über ein Display 13 (Monitor) o.ä. wird der gewünschte Förderwirkungsgrad eingegeben und mit dem aktuellen Förderwirkungsgrad verglichen. Bei Abweichungen erfolgt eine Ausregelung auf den Sollwert durch Verstellung des Verstellgliedes 4. Ein Drehimpulsgeber 11 gibt die Abzugsgeschwindigkeit, z.B. bei Folien, in den Rechner 10. Der Rechner regelt auf das jeweils gewünschte Metergewicht.

Bezugszeichenliste

1 Wägezelle
2 Materialtrichter
3 Maschinentrichter des Extruders
4 Verstellzylinder zum Verstellen der effektiven Nutlänge
5 Extruderzylinder
6 Extruderschnecke
7 Nutbüchse mit konisch verlaufenden Nuten
10 Rechner
11 Drehimpulsgeber
12 "
13 Display
X Verstellrichtung
Y
L Maß
$L_1$ "

Literaturverzeichnis

DE-OS 32 33 841
DE-OS 31 07 701
Sonderdruck aus der Zeitschrift "Kunststoffe" Bd. 60 - 1970 Heft 5, Seiten 294 - 300 "Verarbeitung von Polyäthylen auf Einschneckenextrudern mit genuteter und gekühlter Einzugszone"
Kunststoffe Bd. 59 1969 Heft 11, S. 757 (760) "Der Einfluß der Einzugszone auf die Fördercharakteristik eines Einschneckenextruders"
Kunststoffe 68 (1978) 1 S. 12 (16) "Optimieren der verfahrenstechnischen Auslegung von Einschneckenextrudern" Kunststoff-Berater 11/1970 S. 1071 (1076) "Ein neues Extruderkonzept mit verbesserter Förderwirkung der Einzugszone"
DE-PS 19 64 386.

Patentansprüche

1. Meß- und Regeleinrichtung zum Verarbeiten thermoplastischer Massen mit einem Materialtrichter und einem Einzugsteil, das über seinen Umfang mit mehreren sich in Förderrichtung konisch verjüngenden Längsnuten versehen ist, deren Volumina veränderbar ist, **dadurch gekennzeichnet**, daß mittels einer gravimetrischen Durchsatzmessung der aktuelle Förderwirkungsgrad erfaßt und durch axiale Verschiebung des wirksamen Einlaufpunktes, bezogen auf die wirksame Nutlänge, der gewünschte Wert des Förderwirkungsgrades geregelt wird.

2. Schneckenextruder zur Anwendung der Meß- bzw. Regeleinrichtung nach Anspruch 1, mit einem Materialtrichter und einer diesem Materialtrichter zugeordneten Wägezelle zur gravimetrischen Erfassung des zugeführten thermoplastischen Kunststoffes, einer im Einlaufteil angeordneten Nutbüchse, die mehrere über den Umfang verteilt angeordnete, sich in Durchlaufrichtung erstreckende, konischen Nuten aufweist, und einem nachgeschalteten Schneckenextruder, **dadurch gekennzeichnet**, daß der Materialtrichter (3) getrieblich mit einem Verstellmotor, z.B. mit einem Verstellzylinder (4), gekuppelt ist, der abwechselnd beidseitig durch Druckmitteldruck beaufschlagbar ist, wodurch der Materialtrichter (3) stufenlos verschiebbar angeordnet ist.

3. Schneckenextruder nach Anspruch 2, **dadurch gekennzeichnet**, daß die wirksame Nutlänge (L) durch die Verschiebbarkeit des Materialtrichters (3) zwischen dem etwa einfachen und etwa vierfachen Durchmesser der Extruderschnecke (6) stufenlos veränderbar ist.

## Claims

1. Measuring and regulating device for processing thermoplastic masses with a material feeding hopper and a drawing-in component, which is provided over its perphery with a number of longitudinal grooves, which converge conically in the direction of feed, whose volume can be altered, characterized in that, the actual efficiency of the feed is determined by means of a gravimetric measurement of the throughput and the axial movement of the effective intake point, based on the length of the groove, regulates the desired value of the degree of efficiency of the feed.

2. Worm extruder for the application of the measuring and/or regulating device in accordance with claim 1, with a material feeding hopper and a weighing cell which is correlated to this material feeding hopper for the gravimetric measuring of the thermoplastic synthetic material fed, grooved bushing located in the intake component the periphery of which is provided with a number of conical grooves extending in the direction of the feed and a downstream worm extruder characterized in that the material feeding hopper (3) is coupled operationally with a positioning motor e.g. with a positioning cylinder (4) which can be loaded on both sides, alternatingly, with average pressure, whereby the material feeding hopper (3) is arranged in such a way that it can be moved steplessly.

3. Worm extruder in accordance with claim 2, characterized in that, the effective length of the groove (L) can be steplessly altered due to the movability of the material feeding hopper (3) between approximately the single and quadruple diameter of the extruder worm (6).

## Revendications

1. Dispositif de mesure et de régulation servant à la transformation des pâtes thermoplastiques à l'aide d'un entonnoir à matières et d'une pièce d'admission dotée sur sa périphérie de plusieurs rainures allant en s'amincissant dans le sens du refoulement et dont les volumes sont modifiables, caractérisé en ce que par débitmétrie gravimétrique on saisit le rendement actuel au refoulement et que par déplacement axial du point actif d'admission, par rapport à la longueur active de la rainure, on règle le rendement du refoulement à la valeur voulue.

2. Extrudeuse à vis sans fin utilisable dans le dispositif de mesure et de régulation selon revendication 1 présentant un entonnoir à matières et une cellule de pesage affectée à ce dernier pour saisir par gravimétrie la matière plastique thermoplastique amenée, présentant une douille située dans la partie admission et dotée de plusieurs rainures coniques distribuées périphériquement dans le sens de circulation matières, et présentant une extrudeuse aval à vis sans fin, caractérisée en ce que l'entonnoir à matières (3) se déplace sous l'action d'un moteur, d'un vérin (4) par exemple, lequel est à double effet par montée en pression d'un fluide à l'intérieur alternativement d'un côté puis de l'autre, rendant le positionnement de l'entonnoir (3) réglable à volonté.

3. Extrudeuse à vis sans fin selon revendication 2, caractérisée en ce que la longueur active de la rainure (L) est réglable à volonté du fait que l'entonnoir (3) à matières peut se déplacer et changer de diamètre à volonté dans une plage diamétrale comprise entre une fois et quatre fois le diamètre de l'extrudeuse à vis sans fin (6).

Fig.1

Fig.2

EP 0 213 264 B1